**Europäisches Patentamt**

(19) **European Patent Office**

**Office européen des brevets**

(11) Numéro de publication: **0 078 226**
**B1**

## (12) FASCICULE DE BREVET EUROPEEN

(45) Date de publication du fascicule du brevet: **12.03.86**

(51) Int. Cl.⁴: **C 12 G 3/08**

(21) Numéro de dépôt: **82401982.2**

(22) Date de dépôt: **26.10.82**

(54) **Boissons alcoolisées et leur procédé de fabrication.**

(30) Priorité: **27.10.81 FR 8120175**

(43) Date de publication de la demande:
**04.05.83 Bulletin 83/18**

(45) Mention de la délivrance du brevet:
**12.03.86 Bulletin 86/11**

(84) Etats contractants désignés:
**AT BE CH DE GB IT LI LU NL SE**

(56) Documents cités:
**EP - A - 0 057 785**
**WO - A - 82/02405**
**BE - A - 717 847**
**DE - A - 2 339 206**
**FR - A - 1 585 376**
**FR - A - 2 443 503**

(73) Titulaire: **UNION DE BRASSERIES, 33, avenue de Wagram, F-75017 Paris (FR)**

(72) Inventeur: **Bonnome, Jean-Pierre, 29, boulevard Henri Ruel, F-94120 Fontenay-sous-Bois (FR)**

(74) Mandataire: **Dupas, Marie-Cécile et al, Cabinet NETTER 40, rue Vignon, F-75009 Paris (FR)**

## Description

L'invention est relative à un procédé de fabrication de boissons alcoolisées ainsi qu'aux boissons alcoolisées obtenues par ce procédé.

Il a déjà été proposé de soumettre un liquide alcoolisé obtenu par fermentation à un traitement d'osmose inverse par hyperfiltration pour préparer une boisson alcoolisée.

Dans la Demande de Brevet européen EP-A 57 785, d'ailleurs à considérer seulement pour deux Etats, à savoir la République Fédérale d'Allemagne et la Grande-Bretagne, l'hyperfiltration est utilisée limitativement pour éviter les inconvénients qui résultent du stockage prolongé d'une boisson à base de malt, comme la bière, aromatisée au citron.

Dans le document français FR-A 2 443 503 on décrit un procédé de clarification des vins; le procédé aboutit donc à un vin.

Le Brevet belge 717 847 vise le traitement d'un vin blanc par hyperfiltration, suivant lequel la seule utilisation indiquée pour le filtrat est de le mélanger au concentrat.

La Demanderesse a maintenant constaté que, contrairement à ce qui était admis jusqu'ici, le perméat obtenu par hyperfiltration ou ultrafiltration d'un vin avait une saveur caractéristique, agréable. L'invention a donc pour objet un procédé de fabrication d'une boisson alcoolisée à partir d'un vin en faisant appel à une hyperfiltration ou une ultrafiltration, caractérisé en ce que le vin de départ est soumis à une hyperfiltration ou une ultrafiltration propre à fournir un perméat différent d'un vin, tout en ayant une qualité gustative, ledit perméat constituant la base de la boisson recherchée.

La qualité gustative est attribuée au fait que des composants du vin traversent la membrane d'hyperfiltration ou d'ultrafiltration bien qu'en des quantité suffisamment petites pour qu'ils soient indosables dans le perméat, mais qui sont cependant suffisantes pour conférer au perméat cette saveur permettant sa dégustation par la suite, soit seul, soit après aromatisation.

Dans ce dernier cas, la boisson obtenue n'a pas le goût qui correspond simplement à l'arôme ajouté, mais un goût différent, dans de nombreux cas plus apprécié du consommateur et qui résulte du mélange dudit arôme avec les composants du vin que contient le perméat.

L'invention crée ainsi une voie nouvelle pour l'écoulement sur le marché des vins d'une production agricole, notamment de ceux qui, jusqu'à présent, étaient, en raison de leur faible qualité, les plus difficilement valorisables, comme les vins dits «lourds» à teneur alcoolique relativement élevée.

L'hyper- ou ultrafiltration peut être considérée à cet égard comme un moyen pour que le produit consommé ne contienne que les composants contribuant à la bonne qualité finale, ceux dont la présence réduisait la valeur du vin de départ ayant été éliminés.

Une application particulièrement intéressante de l'invention réside dans le fait qu'on peut utiliser le perméat obtenu par osmose inverse d'un vin rouge ordinaire pour, après adjonction de produit aromatisant approprié, fabriquer une boisson alcoolisée du type de celle actuellement fabriquée à partir de vin blanc mais qui sont d'un prix de revient plus bas, le vin rouge ordinaire étant, comme connu, sensiblement moins coûteux que le vin blanc.

Le ou les produits aromatisants ajoutés au perméat sont choisis parmi les extraits de fruits, les jus de fruits, les liqueurs de fruits ou encore les eaux de vie.

On peut, si nécessaire, ajouter, en plus du produit aromatisant, du sucre.

On peut également ajouter de l'alcool, notamment en vue d'obtenir une boisson pouvant être considérée comme un apéritif, le degré alcoolique nécessaire à cet égard pouvant être obtenu par ajout d'une quantité appropriée d'alcool ou par cryoconcentration.

Suivant les additifs utilisés, plus particulièrement suivant le type d'arôme choisi, on aboutit à des boissons alcoolisées qui peuvent être de goûts très différents entre elles.

Lorsque l'arôme est fourni par une liqueur de cassis la boisson obtenue est apparentée à la boisson connue sous le non de kir.

En ajoutant au perméat des extraits d'orange, du sucre, éventuellement du rhum, on obtient une boisson qui, bien qu'elle soit aussi préparée à partir de vin rouge ordinaire, est de couleur claire et tout à fait comparable au vin d'orange.

Le perméat, constituant de base des boissons alcoolisées selon l'invention, est obtenu, comme indiqué ci-dessus, par mise en oeuvre d'un traitement d'osmose inverse d'un vin.

Si la boisson préparée peut avoir une teneur en matières sèches non négligeables, on fait subir au vin une ultrafiltration au lieu d'une hyperfiltration.

Pour augmenter le rendement d'extraction des différents produits à odeur de vin et notamment pour augmenter le rendement alcoolique du procédé, conformément à l'invention on fait subir au concentrat recueilli lors d'un premier traitement d'hyper ou d'ultrafiltration, après dilution, un deuxième traitement d'hyper ou d'ultrafiltration et on rassemble le perméat du premier traitement et le perméat du second traitement avant l'aromatisation éventuelle.

L'invention prévoit également, toujours pour augmenter le rendement d'extraction des différents produits à odeur de vin et notamment pour augmenter le rendement alcoolique du procédé, mais sans utilisation d'eau d'apport extérieure, que le concentrat de la première hyper ou ultrafiltration est dilué, avant la deuxième hyper ou ultrafiltration, non pas avec de l'eau pure mais avec le perméat obtenu par une hyperfiltration intermédiaire du perméat de la première hyper ou ultrafiltration sur une membrane sensiblement imperméable à l'alcool, et on ajoute au perméat de la deuxième hyper- ou ultrafiltration le concentrat de l'hyperfiltration intermédiaire avant l'aromatisation éventuelle.

Ainsi, tous les produits à odeur de vin peuvent être extraits du concentrat, au rendement d'extraction près, en choisissant de façon appropriée le type de membrane des différentes opérations d'hyper ou ultrafiltration et l'association de ces opérations, l'eau d'extraction des produits à odeur de vin étant avantageusement fournie par la désalcoolisation du perméat.

L'invention est décrite ci-après plus en détail en référence aux dessins annexés et à des exemples de fabrication de boissons:

– la figure 1 est un diagramme représentatif du déroulement du procédé selon l'invention pour un premier mode d'exécution;

– la figure 2 est un diagramme du même type mais pour un deuxième mode d'exécution;

– la figure 3 est un diagramme du même type mais pour un troisième mode d'exécution.

D'une manière générale, conformément à l'invention, on fait subir au vin ordinaire un traitement d'hyper ou ultrafiltration sous des conditions opératoires habituelles.

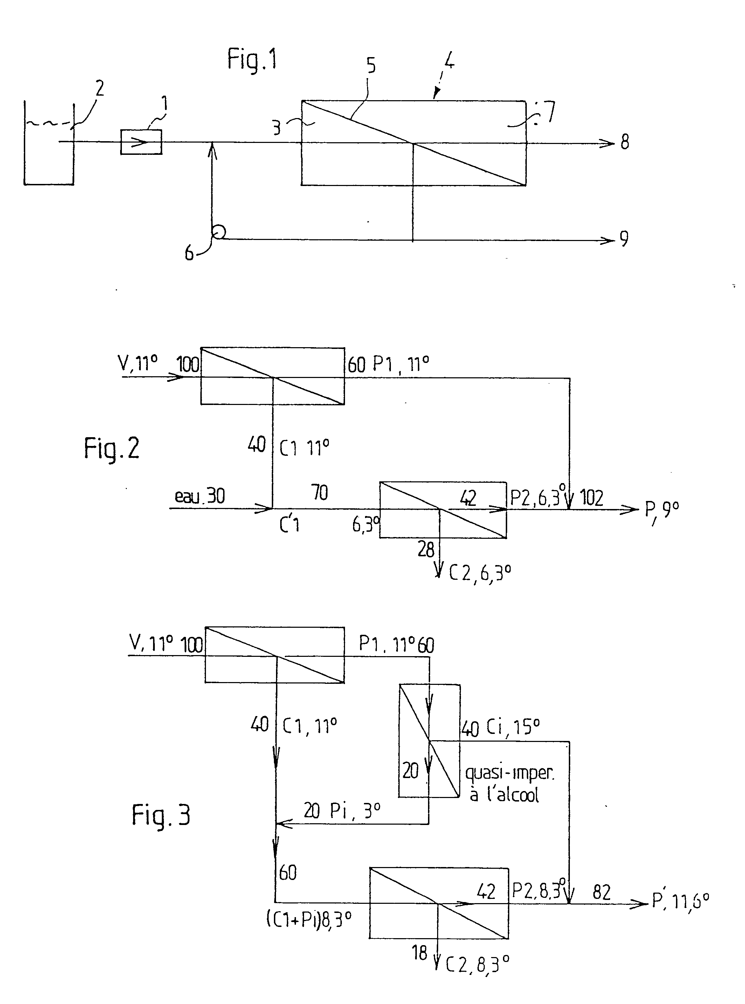

On fait passer sous pression, par l'intermédiaire d'une pompe haute-pression 1, un vin provenant d'une cuve 2 dans le compartiment amont 3 d'une cellule d'hyper ou ultrafiltration 4 à membrane semi-perméable appropriée 5 (figure 1).

On établit comme connu un circuit de recyclage d'une fraction du concentrat en amont de la cellule, à l'aide d'une pompe 6 ramenant le concentrat en aval de la pompe haute-pression, et ce afin de créer le balayage nécessaire à la surface amont de la membrane.

Après réglage des différents paramètres, et après une première période au cours de laquelle l'eau initialement contenue dans le compartiment aval 7 de la cellule est éliminée et le circuit de recyclage de concentrat s'établit, on obtient un régime «de croisière» qui, pour la pression osmotique résultante, pour une surface donnée de la membrane, pour une pression donnée de la pompe haute-pression et une température donnée, permet d'obtenir, l'installation étant alimentée en continu, un débit constant en perméat à la sortie 8 du compartiment 7. Pour un réglage approprié de la pompe de recyclage 6, on obtient également un débit constant du concentrat non recyclé à la sortie 9.

Ceci revient à dire qu'on peut régler l'installation pour obtenir, pour 100 parties de vin introduites dans l'installation, un rapport approprié constant entre perméat et concentrat, et notamment pour obtenir un plus grand volume de perméat que de concentrat.

Le réglage peut être fait pour l'obtention d'une proportion de perméat pouvant aller jusqu'à 80% du volume du vin traité.

Il a été constaté que le taux de colmatage des membranes utilisées pour l'hyperfiltration n'a rien d'excessif eu égard à la rentabilité de l'exploitation du procédé.

Exemple 1

On fait passer un vin rouge ordinaire à 11° d'alcool dans une cellule d'osmose inverse, par mise en oeuvre des conditions générales exposées ci-dessus en référence à la figure 1, l'installation étant réglée de façon que, en régime continu, pour 100 parties de vin introduites, on obtienne 30 parties de concentrat et 70 parties de perméat.

Le degré alcoolique du perméat est, bien entendu, 11°, de sorte que le rendement alcoolique global de l'opération est de 70%. Le traitement est poursuivi comme décrit ci-après.

Exemple 2

Comme schématisé sur la figure 2, on fait tout d'abord passer un vin rouge ordinaire à 11° d'alcool dans une cellule d'osmose inverse, de façon à obtenir 40 parties de concentrat C1 à 11° d'alcool et 60 parties de perméat P1 à 11° d'alcool également.

Le concentrat, après avoir été dilué avec 30 parties d'eau de façon à réduire la pression osmotique pour permettre un deuxième traitement d'osmose inverse est soumis à une deuxième osmose inverse dans des conditions de réglage telles qu'à partir des 70 parties de concentrat C1 dilué à 6,3° d'alcool, on obtient 28 parties de concentrat C2 à 6,3° d'alcool et 42 parties de perméat P2 à 6,3° d'alcool.

Les deux perméats sont rassemblés de sorte qu'on obtient globalement 102 parties de perméat P à 9° d'alcool, ce perméat pouvant être utilisé pour l'obtention d'une boisson alcoolisée, comme décrit ci-après.

Dans ce cas, le rendement alcoolique du processus global est de 84%.

Exemple 3

Le processus est mis en oeuvre de façon analogue à celui de l'exemple 2 mais, au lieu d'utiliser de l'eau de coupage extérieure pour le concentrat soumis à la deuxième osmose inverse, on utilise de l'eau constituée par le perméat obtenu au cours d'une opération d'osmose inverse intermédiaire qu'on fait subir au perméat de la première opération (voir figure 3).

Ainsi, les 60 parties de perméat P1 à 11° d'alcool de la première osmose inverse sont soumis à une osmose inverse intermédiaire avec utilisation d'une membrane sensiblement imperméable à l'alcool de telle façon qu'on obtienne 40 parties de concentrat Ci à 15° d'alcool et 20 parties de perméat Pi à 3° d'alcool.

Ces 20 parties de perméat Pi sont rajoutées aux 40 parties de concentrat C1 à 11° d'alcool de la première osmose inverse pour constituer 60 parties d'un produit à 8,3° d'alcool qui est soumis à une deuxième opération d'osmose inverse propre à fournir 18 parties de concentrat C2 à 8,3° d'alcool et 42 parties de perméat P2 à 8,3° d'alcool.

On rassemble de perméat P2 de la deuxième osmose inverse et le concentrat Ci de l'osmose inverse intermédiaire, et l'on obtient 82 parties de «perméat» P' à 11,6° d'alcool, qui est traité comme décrit ci-après.

Dans ce cas, le rendement alcoolique global du procédé est de l'ordre de 84% également.

En associant le traitement décrit dans l'exemple 3 et celui décrit dans l'exemple 2, ou en associant plusieurs traitements tels que celui décrit dans l'exemple 3, on parvient à augmenter encore plus le rendement alcoolique du procédé, jusqu'à environ 95%.

Exemples de fabrication de boissons alcoolisées.

On part d'un perméat final tel qu'obtenu suivant l'Exemple 1, 2 ou 3 ci-dessus et on ajoute divers produits.

Boisson N° 1
Composition:
Perméat: 88 parties en volume
Jus de fruit de la passion: 12 parties en volume
Sucre: 70 grammes/litre
Acide citrique: 1,5 gramme/litre.
On obtient ainsi une boisson alcoolisée au fruit de la Passion.

Boisson N° 2
Composition:
Perméat: 80 parties en volume
Jus d'orange: 15 parties en volume
Vodka: 5 parties en volume
Sucre: 70 grammes /litre
Acide citrique: 1,5 grammes/litre
On obtient ainsi une boisson à l'orange alcoolisée.

Boisson N° 3
Composition:
Perméat: 84 parties en volume
Jus de goyave: 12 parties en volume
Vodka: 4 parties en volume
Sucre: 70 grammes/litre
Acide citrique: 1,5 gramme/litre

Boisson N° 4
Composition:
Perméat: 97 parties en volume
Rhum: 3 parties en volume
Sucre: 70 grammes/litre
Acide citrique: 1,5 gramme/litre
Extrait d'orange: 0,15 gramme/litre
On obtient ainsi un punch à l'orange.

**Revendications**

1. Procédé de fabrication d'une boisson alcoolisée à partir d'un vin en faisant appel à une hyperfiltration ou une ultrafiltration, caractérisé en ce que le vin départ est soumis à une hyperfiltration ou une ultrafiltration propre à fournir un perméat différent d'un vin, tout en ayant une qualité gustative, ledit perméat constituant la base de la boisson recherchée.

2. Procédé selon la revendication 1, caractérisé en ce que le vin de départ est un vin rouge.

3. Procédé selon la revendication 2, caractérisé en ce que le vin de départ est un vin rouge lourd.

4. Procédé de fabrication d'une boisson alcoolisée à partir d'un vin en faisant appel à une hyperfiltration ou une ultrafiltration, caractérisé en ce que le vin de départ est soumis à une hyperfiltration ou une ultrafiltration propre à fournir un perméat différent d'un vin, et en ce qu'on ajoute audit perméat un aromatisant, ledit perméat aromatisé constituant la boisson recherchée.

5. Procédé de fabrication d'une boisson alcoolisée par hyperfiltration ou ultrafiltration d'un vin dont on recueille le perméat, caractérisé en ce que le vin de départ est un vin rouge lourd, le perméat recueilli formant la base de ladite boisson.

6. Procédé selon l'une des revendications 1 à 5, caractérisé en ce qu'une partie au moins du concentrat fourni par l'hyper ou ultrafiltration est retournée au vin soumis à ladite hyperfiltration ou ultrafiltration.

7. Procédé selon l'une quelconque des revendications précédentes, caractérisé en ce que la membrane de l'hyper ou ultrafiltration est choisie pour que la teneur alcoolique du perméat soit sensiblement égale à la teneur alcoolique du concentrat.

8. Procédé selon la revendication 1, caractérisé en ce que le concentrat résultant de l'hyper ou ultrafiltration est soumis à une seconde hyper ou ultrafiltration après avoir été dilué, le perméat fourni par cette seconde hyper ou ultrafiltration étant ajouté au perméat résultant de la première hyper ou ultrafiltration.

9. Procédé selon la revendication 8, caractérisé en ce que la dilution du concentrat résultant de la première hyper- ou ultrafiltration a lieu par adjonction d'eau.

10. Procédé selon la revendication 8, caractérisé en ce que la dilution du premier concentrat a lieu à l'aide d'un perméat résultant d'une hyperfiltration à laquelle est soumis le perméat résultant de la première hyper- ou ultrafiltration conduite de manière à fournir un concentrat à teneur alcoolique plus élevée que celle du perméat de la première hyper- ou ultrafiltration.

11. Procédé selon la revendication 10, caractérisé en ce que le concentrat à teneur alcoolique élevée est ajouté au perméat résultant de la seconde hyperfiltration.

12. Produit obtenu par la mise en oeuvre d'un procédé selon l'une quelconque des revendications 1 à 11.

13. Boisson alcoolisée, caractérisé en ce qu'elle est à base du perméat résultant de l'hyperfiltration ou de l'ultrafiltration d'un vin rouge lourd.

14. Boisson alcoolisée, caractérisée en ce qu'elle est à base du perméat résultant de l'hyperfiltration ou de l'ultrafiltration d'un vin rouge lourd auquel on a ajouté un arômatisant.

15. Boisson alcoolisée selon l'une des revendications 13 et 14, caractérisée en ce qu'elle est dépourvue d'extraits secs du vin rouge lourd de départ.

16. Boisson alcoolisée, caractérisée en ce qu'elle est constituée par le mélange de la boisson selon l'une des revendications 13 à 15, avec une boisson à teneur alcoolique plus élevée.

17. Boisson alcoolisée, caractérisée en ce qu'elle est constituée par le mélange de la boisson selon l'une des revendications 13 à 15, avec une boisson à teneur alcoolique moins élevée.

18. Boisson alcoolisée caractérisée en ce qu'elle résulte de la gazéification de la boisson selon l'une des revendications 13 à 17.

## Patentansprüche

1. Verfahren zur Herstellung eines alkoholischen Getränkes aus Wein durch Anwendung einer Hyperfiltration oder Ultrafiltration, dadurch gekennzeichnet, dass der Ausgangswein einer geeigneten Hyperfiltration oder Ultrafiltration unterzogen wird, die ein Permeat ergibt, das unterschiedlich vom Wein ist, obwohl es eine bestimmte Geschmacksqualität aufweist, und dass dieses Permeat den Grundstoff des gesuchten Getränkes bildet.

2. Verfahren nach Anspruch 1, dadurch gekennzeichnet, dass der Ausgangswein ein Rotwein ist.

3. Verfahren nach Anspruch 2, dadurch gekennzeichnet, dass der Ausgangswein ein schwerer Rotwein ist.

4. Verfahren zur Herstelllung eines alkoholischen Getränkes aus Wein durch Anwendung einer Hyperfiltration oder einer Ultrafiltration, dadurch gekennzeichnet, dass der Ausgangswein einer geeigneten Hyperfiltration oder Ultrafiltration unterzogen wird, so dass sich ein von Wein verschiedenes Permeat ergibt, und dass man diesem Permeat ein Aromamittel zufügt, wodurch dieses Permeat das gewünschte Getränk ergibt.

5. Verfahren zur Herstellung eines alkoholischen Getränkes durch Hyperfiltration oder Ultrafiltration eines Weines durch Auffangen des Permeats, dadurch gekennzeichnet, dass der Ausgangswein ein schwerer Rotwein ist und das aufgefangene Permeat den Grundstoff des genannten Getränkes bildet.

6. Verfahren nach einem der Ansprüche 1-5, dadurch gekennzeichnet, dass zumindest ein Teil des durch die Hyper- oder Ultrafiltration erzeugten Konzentrates dem Ausgangswein, der dieser Hyperfiltration oder Ultrafiltration unterzogen wird, wieder zugeführt wird.

7. Verfahren nach einem der vorhergehenden Ansprüche, dadurch gekennzeichnet, dass die Membran beim Hyper- oder Ultrafiltrationsverfahren derart gewählt ist, dass der Alkoholgehalt des Permeats im wesentlichen gleich dem Alkoholgehalt des Konzentrats ist.

8. Verfahren nach Anspruch 1, dadurch gekennzeichnet, dass das aus dem Hyper- oder Ultrafiltrationsverfahren entstehende Konzentrat einer zweiten Hyper- oder Ultrafiltration unterworfen wird, nachdem es verdünnt wurde, und dass das aus dieser zweiten Hyper- oder Ultrafiltration gebildete Permeat dem aus dem ersten Hyper- oder Ultrafiltrationsvorgang entstandenen Permeat zugefügt wird.

9. Verfahren nach Anspruch 8, dadurch gekennzeichnet, dass die Verdünnung des Konzentrats nach der ersten Hyper- oder Ultrafiltration durch Zufügung von Wasser durchgeführt wird.

10. Verfahren nach Anspruch 8, dadurch gekennzeichnet, dass die Verdünnung des ersten Konzentrats mit Hilfe eines Permeats durchgeführt wird, das aus einer Hyperfiltration stammt, der das aus dem ersten Hyper- oder Ultrafiltrationsverfahren entstandene Permeat unterzogen wird, das derart durchgeführt wird, dass ein Konzentrat erzeugt wird mit einem Alkoholgehalt, der höher liegt als derjenige des Permeats nach dem ersten Hyper- oder Ultrafiltrationsvorgang.

11. Verfahren nach Anspruch 10, dadurch gekennzeichnet, dass das Konzentrat mit erhöhtem Alkoholgehalt dem aus dem zweiten Hyperfiltrationsprozess hervorgehenden Permeat zugefügt wird.

12. Erzeugnis aus der Anwendung eines der Verfahren nach einem der Ansprüche 1-11.

13. Alkoholisches Getränk, dadurch gekennzeichnet, dass es auf einem Permeat basiert, das aus der Hyperfiltration oder der Ultrafiltration eines schweren Rotweines hervorgeht.

14. Alkoholisches Getränk, dadurch gekennzeichnet, dass es auf einem Permeat basiert, das aus der Hyperfiltration oder der Ultrafiltration eines schweren Rotweins hervorgeht, und dem ein Aromastoff hinzugefügt wird.

15. Alkoholisches Getränk nach einem der Ansprüche 13 und 14, dadurch gekennzeichnet, dass es ohne trockene Bestandteile des als Ausgangsstoff dienenden schweren Rotweines ist.

16. Alkoholisches Getränk, dadurch gekennzeichnet, dass es aus einer Mischung eines Getränkes nach einem der Ansprüche 13 und 14 mit einem Getränk mit höherem Alkoholgehalt zusammengesetzt ist.

17. Alkoholisches Getränk, dadurch gekennzeichnet, dass es durch die Mischung eines Getränks nach einem der Ansprüche 13-15 mit einem Getränk mit niedrigerem alkoholischen Gehalt hergestellt ist.

18. Alkoholisches Getränk, dadurch gekennzeichnet, dass es aus dem Getränk nach einem der Ansprüche 13-17 durch Versetzung mit Kohlensäure gewonnen ist.

## Claims

1. A method of manufacturing an alcoholic beverage, starting from a wine and making use of hyperfiltration or ultrafiltration, characterized in that the initial wine is subjected to hyperfiltration or to ultrafiltration suitable for obtaining a permeate other than wine, while retaining drinking quality, said permeate constituting the basis of the desired beverage.

2. A method according to claim 1, characterized in that the initial wine is a red wine.

3. A method according to claim 2, characterized in that the initial wine is a «heavy» red wine.

4. A method of manufacturing an alcoholic beverage starting from a wine and making use of hyperfiltration or ultrafiltration, characterized in that the initial wine is subjected to hyperfiltration or to ultrafiltration suitable for obtaining a permeate other than wine, and in that flavouring is added to the said permeate, said flavoured permeate constituting the desired beverage.

5. A method of manufacturing an alcoholic beverage by hyperfiltration or ultrafiltration of a wine and by collecting the permeate, characterized in that the initial wine is a «heavy» red wine, and the permeate constitutes the basis of said beverage.

6. A method according to any one of claims 1 to 5, characterized in that at least a portion of the concentrate provided by the hyper- or ultra-filtration is returned to the wine being subjected to said hyperfiltration or ultrafiltration.

7. A method according to any preceding claim, characterized in that the hyper- or ultra-filtration membrane is selected so that the concentration of alcohol in the permeate is substantially equal to the concentration of alcohol in the concentrate.

8. A method according to claim 1, characterized in that the concentrate resulting from the hyper- or ultra-filtration is subjected to a second hyper- or ultra-filtration after being diluted, with the permeate from second hyper- or ultra-filtration being added to the permeate resulting from the first hyper- or ultra-filtration.

9. A method according to claim 8, characterized in that the concentrate resulting from the first hyper- or ultra-filtration is diluted by adding water.

10. A method according to claim 8, characterized in that the first concentrate is diluted by means of a permeate resulting from hyperfiltration of the permeate which results from the first hyper- or ultra-filtration and operated in such a manner as to provide a concentrate having a higher concentration of alcohol than the permeate from the first hyper- or ultra-filtration.

11. A method according to claim 10, characterized in that the concentrate having a high concentration of alcohol is added to the permeate resulting from the second hyperfiltration.

12. A product obtained by implementing a method according to any one of claims 1 to 11.

13. An alcoholic beverage, characterized in that it is based on a permeate resulting from hyperfiltration or ultrafiltration of a «heavy» red wine.

14. An alcoholic beverage, characterized in that it is based on a permeate resulting from hyperfiltration or ultrafiltration of a «heavy» red wine to which flavouring has been added.

15. An alcoholic beverage according to claim 13 or 14, characterized in that it contains none of the dry matter of the initial «heavy» red wine.

16. An alcoholic beverage, characterized in that it is constituted by mixing a beverage according to any one of claims 13 to 15 with a beverage having a higher concentration of alcohol.

17. An alcoholic beverage, characterized in that it is constituted by mixing a beverage according to any one of claims 13 to 15 with a beverage having a lower concentration of alcohol.

18. An alcoholic beverage characterized in that it results from aerating the beverage according to any one of claims 13 to 17.

Fig.1

2

1

5    4

3    7

8

6    9

Fig.2

V,11° 100    60 P1,11°

40 C1 11°

eau.30    70    42    P2,6,3° 102    P,9°

C'1    6,3°

28

C2,6,3°

Fig.3

V,11° 100    P1,11°60

40 C1,11°

40 Ci,15°

20    quasi-imper.
à l'alcool

20 Pi,3°

60

(C1+Pi)8,3°    42    P2,8,3°    82    P',11,6°

18    C2,8,3°